Europäisches Patentamt

(19) European Patent Office

Office européen des brevets

(11) Publication number: **0 137 570**
**A2**

(12) **EUROPEAN PATENT APPLICATION**

(21) Application number: **84201439.1**

(22) Date of filing: **09.10.84**

(51) Int. Cl.⁴: **B 65 G 65/00**
**B 65 G 17/26**

(30) Priority: **10.10.83 NL 8303475**

(43) Date of publication of application:
**17.04.85 Bulletin 85/16**

(84) Designated Contracting States:
**AT BE CH DE FR GB IT LI LU SE**

(71) Applicant: **Staat der Nederlanden (Staatsbedrijf der Posterijen, Telegrafie en Telefonie)**
**P.O. Box 430**
**NL-2260 AK Leidschendam(NL)**

(72) Inventor: **van den Akker, Rudolf Jan Adrianus Maria**
**6 van Sevenbergsestraat**
**NL-2274 PL Voorburg(NL)**

(72) Inventor: **Dirkse, Gerardus Adrianus Hendrikus**
**65 Dr. R.J. Fruinstraat**
**NL-2552 LE s'Gravenhage(NL)**

(54) Accumulating conveyor apparatus for effecating vertical movement and storage of tubs, or similar containers.

(57) Accumulating conveyor apparatus for effecting vertical movement of tubs or similar containers. For conveying and storing such containers along a vertical transfer path use is made of a set of endless conveyor chains which are continuously extending along substantially the full length of said vertical transfer path. Spring biased conveyor cams are distributed along the length of the conveyor chains, said cams are adapted to glide past abutment means of a respective container, if vertical movement of that container is inhibited. To that end locking means are disposed along said vertical transfer path. Said locking means are selectively set in a blocking position, wherein vertical movement of a container is inhibited, if the next downstream situated container is found locked in a position wherein its further vertical movement is inhibited.

./...

FIG.1

– 1 –

Accumulating conveyor apparatus for effecting vertical movement and storage of tubs, or similar containers.

A. Background of the invention
   1. Field of the invention

The present invention relates to conveyor apparatus for effecting vertical movement and storage, respectively of members, such as tubs, or similar containers.

   2. Prior art

An accumulating conveyor apparatus for effecting substantially vertical movement of members, such as tubs or similar containers, comprising: endless conveyor means defining a substantially vertical transfer path, said conveyor means being provided with engagement means for engaging abutment means on the members; member monitor means for producing control signals in dependence of the relative position of a member; and control means which in response to said control signals regulate the vertical movement of members along said transfer path, is known from the German Offenlegungsschrift 1531029.

A conveyor apparatus of the above-defined kind comprises a plurality of sets of endless conveyors which are disposed sequentially one above the other. Each set has its own drive motor means individually assigned thereto, and defines one single storage position of a vertical transfer path along which the containers can be moved from an entrance position at a first level to an exit position at a second and

- 2 -

different level. For regulating the vertical movement and storage, respectively of containers use has been made of control switches disposed alongside the vertical transfer path, and which are actuated by the respective containers in order to control the operation of the drive motor means. This prior art apparatus is arranged to operate in a manner similar to a shift register with first-in-first-out operation, and wherein all the available storage positions can be effectively used.

From a structural point of view the above prior art conveyor apparatus is rather complicated, while requiring separate drive motor means for each storage position.

B. Summary of the invention

It is an object of the subject invention to improve prior art accumulating conveyor apparatus. More in particular it is an object of this invention to provide accumulating conveyor apparatus of the above-defined kind, however, having a simple and reliable structure, which can be economically manufactured. The accumulating conveyor apparatus is according to the invention characterized thereby that said endless conveyor means are adapted to continuously extend along substantially the full length of said vertical transfer path; said engagement means include spring biased cams, which are adapted to glide along said abutment means, if the respective member is locked in a stationary position; and said control means include member locking means which are disposed along said vertical transfer path and which are selectively set in a holding position wherein the vertical movement of a member is inhibited, if the next downstream situated member is held locked in its stationary position.

With the above arrangement the conveyor means are moving uninterruptedly during operation, while the vertical transfer and storage of the containers are selectively controlled by means of the spring biased cams and associated container locking means.

A preferred embodiment of accumulating conveyor apparatus of the present invention is characterized thereby that said member (container) blocking means include composite sets of spring biased holding cams, which are shaped to allow unilateral passage of said members while inhibiting movement in the opposite direction of a member, which had been allowed to pass, and blocking pawls which are selectively set in a blocking position wherein movement of a member in a direction corresponding to said unilateral passage is inhibited.

With the above embodiment a robust and reliable structure is obtained.

C. Short description of the drawings

The invention is illustrated, merely by way of example, in the accompanying drawings, in which:

Fig. 1 shows a partly broken away perspective view of an embodiment of an accumulating conveyor apparatus of the present invention;

Fig. 2 in a diagrammatic perspective view of the spatial disposition and structure of the container locking means and spring biased cams for engaging abutment means on the containers, included in the embodiment of figure 1;

Fig. 3 is a detailed and diagrammatic view illustrating the structure and control of a blocking pawl and associated holding cam; and

Fig. 4 is a detailed and diagrammatic view illustrating the structure and operation of a control lever for selectively setting a spring biased cam in its non-active position, wherein it can freely glide along an abutment of a container.

D. References

German Offenlegungsschrift 1531029

German Auslegeschrift 2415667

U.K. patent specification 997141

U.K. patent specification 1.307.380.

E. Detailed description of an embodiment

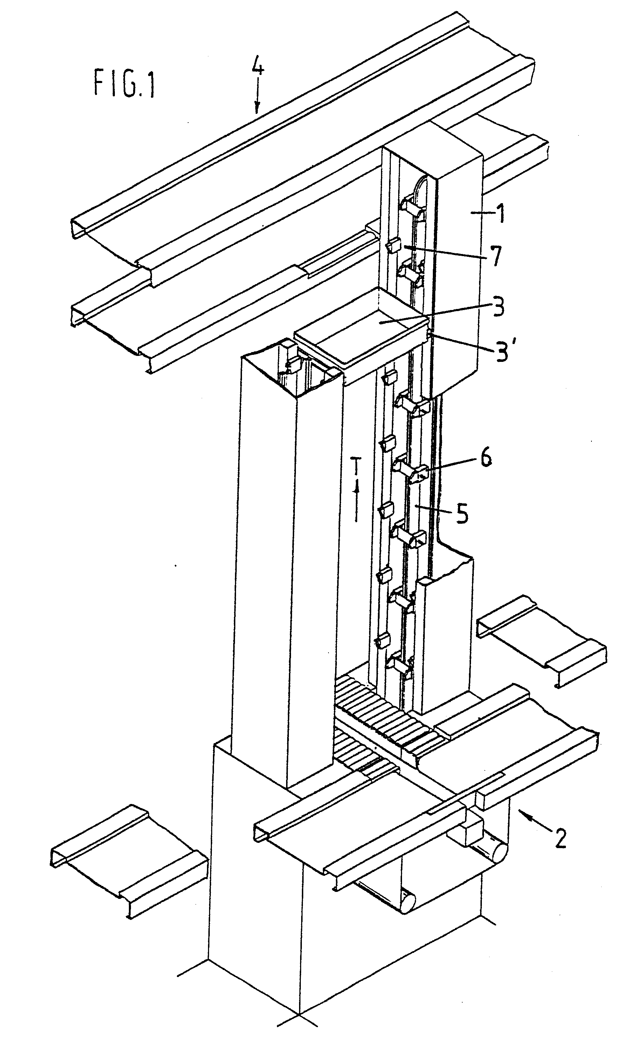

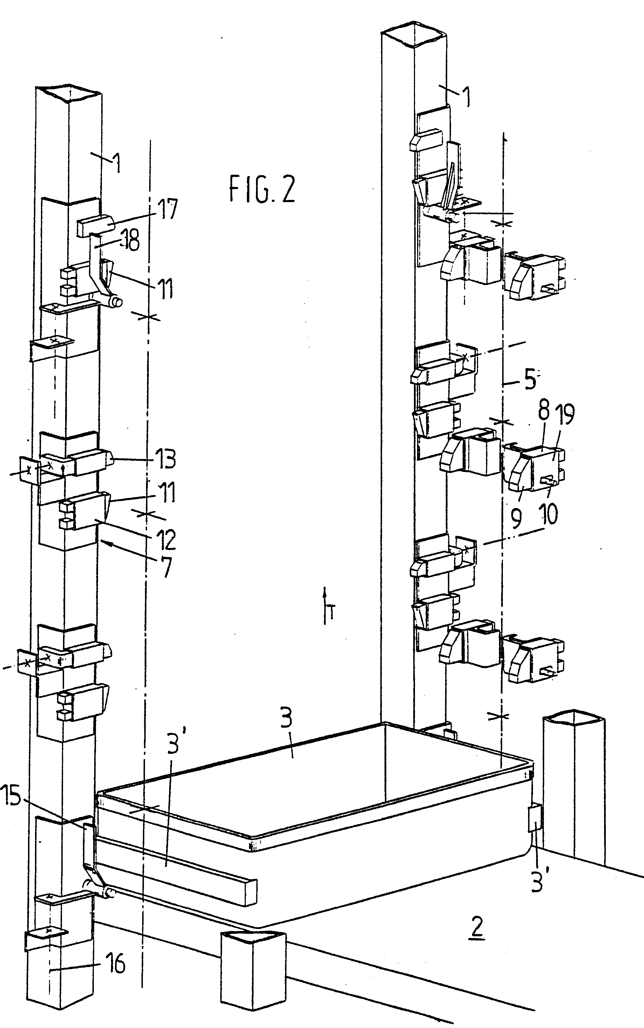

The embodiment shown in the drawings comprises a frame 1, an input end station 2, which is adapted to convey tubs such as 3, applied thereto, into an initial position from which the respective tub is to be transferred following a vertically extending transfer path schematically indicated by the arrow T, and an output end station 4, which is adapted to carry off each tub which has reached the end position in said transfer path T, therefrom. Said frame 1 is adapted to support two endless chain conveyors 5, which are oppositely disposed to each other to define said vertical transfer path T. Each one of said endless chain conveyors is continuously extending along the full length of said transfer path T, and is provided with a plurality of engagement means 6, which as will be more detailed explained further below are adapted for engaging abutment means 3' (Fig. 2) on the tubs 3. Said frame 1 further includes tub locking means 7, which are arranged in four rows (only one row is shown in Fig. 1) along said transfer path T, and tub monitor means, such as for example photo sensitive cells (not shown), for individually monitoring the tubs along said transfer path T in order to produce appropriate control signals.

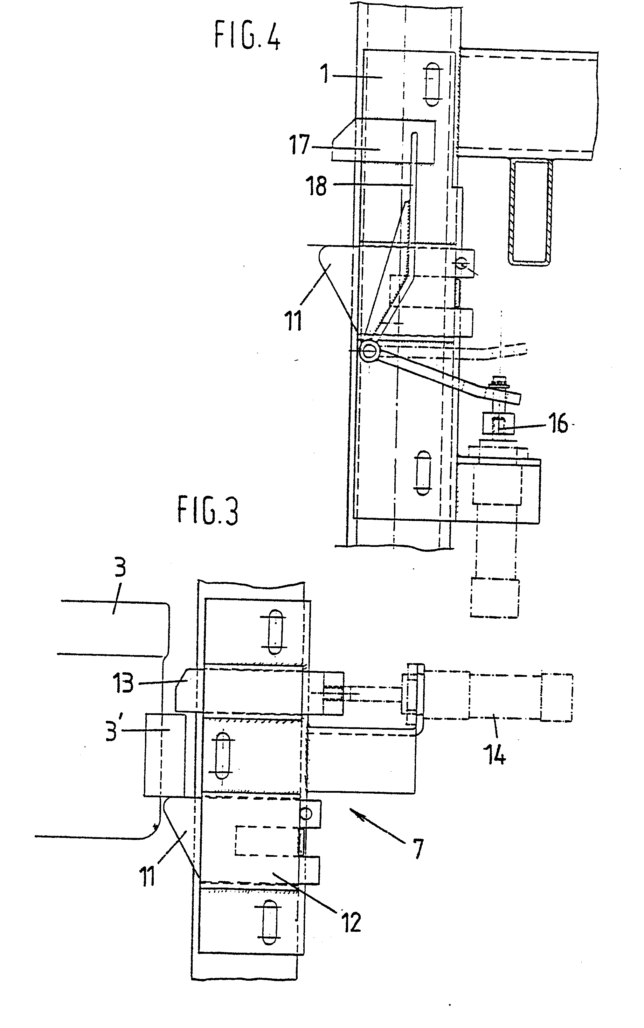

The tub engagement means 6 and the tub locking means 7 are shown more in detail in figures 2, 3 and 4. The tub engagement means 6 each comprise a housing 8, wherein a spring biased conveyor cam 9 is slidably mounted in such a manner that when a vertical force exceeding a predetermined threshold level is exerted thereon, such a cam against the spring force exerted thereon will be pushed into a retracted position within its housing.

As will be explained further herein the conveyor cams alternatively can be set in their retracted position by means of control pins 10.

As soon as a set of conveyor cams 9 mounted on the continuously moving chain conveyors 5 have come into engagement with abutment means 3' of a tub 3, such tub is conveyed in an upward direction; however, if the vertical movement of a tub thus conveyed is inhibited due to the operation of tub locking means 7 of a selected level along said transfer path T, the respective cams 9 are pushed back into their retracted positions within the associated housings 8. Therefore these cams together with the endless conveyor chains 5 are enabled to glide past the tub which is held stationary.

For holding a tub in a stationary position each one of the tub locking means 7 includes a spring biased holding cam 11 having an oblique front portion shaped in such a manner that an abutment means 3' of an upwardly moving tub 3 effectively pushes said holding cam 11 back into a retracted position within its housing 12. Movement in the opposite direction of a tub which has been conveyed beyond such holding cams is inhibited by a flat upper portion thereof. Each one of the tub locking means 7 further includes a slidably mounted blocking pawl 13 which in its outstanding position effectively inhibits vertical movement of a tub Said pawls are selectively controlled by means of an associated control cylinder 14,which in its turn is operated by remote control.

A bistable control lever 15 is pivotally mounted at the lower end of said transfer path T. Under control of an associated drive cylinder 16,which has been schematically shown, the control lever is selectively set into a first stable position and into a second stable position respectively. When set into its first position the control lever causes the respective control pins 10,which together with the endless chain conveyors 5 are continuously moving along said transfer path T, to shift to a position wherein their associated conveyor cams 9 are set in the retracted position. When set into its second position the control lever is not effective to actuate the control pins in the above described manner. The above described control levers of which one is shown in fig. 2 are set in their first operative position, when a tub via the input end station 2 has been entered into the transfer path T, while all the remaining storage positions thereof have a tub stored therein.

In the vicinity of the output end station 4 an end pawl 17 is fixedly mounted on the frame 1, together with a set of control levers 18,which in combination with said pawl 17 ensure that conveyance of tubs beyond the output end station is effectively inhibited.

The above described embodiment of an accumulating conveyor apparatus of the subject invention operates as follows:

A tub such as 3, which via the input end station 2 has been entered into the transfer path T, is transferred in an upward direction through the intermediary action of the respective conveyor cams 9 of the endless chain conveyors 5; all the blocking pawls 13 under control of the associated control cylinders are initially set in their retracted non-blocking positions.

As soon as a tub has come into engagement with said end pawl 17 mounted at the upper end of said transfer path T, the conveyor cams 9 of the respective engagement means 6 mounted on the endless chain conveyors 5, are pushed into their retracted positions, thereby inhibiting further conveyance of the tub. A movement of the tub in the opposite direction is inhibited by the respective holding cams 11, which by spring action have been set into their outstanding position. The control levers 18 are extending into the trajectory of the control pins 10 of the tub engagement means 6. Therefore the respective conveyor cams 9 are inhibited from transferring a tub which is resting on a set of holding cams 11.

In the condition wherein a tub 3, which has been conveyed to the uppermost level of the transfer path T, is not discharged by means of the conveyor included in the output end station, a control signal is produced by the respective one of said monitor means. In response to such a control signal the blocking pawls 13 of the next lower level are set into their blocking position. Thereby the next following tub is caused to stop on this level so that it can rest on the holding cams 11 assigned to that level. Also in this situation the respective monitor means produce a further control signal which in a similar way controls the blocking pawls of the next lower level. As soon as anywhere along the transfer path T a storage position becomes available due to discharge of a tub either from the uppermost level, or from an intermediate level, a control signal is produced whereby the blocking pawls 13 of the next lower level are retracted from their blocking position, thereby enabling the conveyor cams 9 of the respective engagement means 6 mounted on the continuously extending chain conveyors 5 to engage the abutment means 3' of a tub 3, which therefore is conveyed to the position which has become available.

The control lever 15 (fig. 2) is set into its first operative position, in the situation wherein vertical transfer of a tub which has been entered into the transfer path via the input end station has to be inhibited due to the fact that all levels along the transfer path T have a tub stored therein. Said control lever 15 is set into its second non-operative position as soon as one of the levels along the transfer path has become avaible. Consequently, the sequence of tubs extending from the level at which said control lever 15 is disposed to said level which has become available , is vertically transferred thereby filling the free gap.

It will be clear that the invention is not restriced to the embodiment described above. Various modifications and alternative embodiments can be readily designed by a person skilled in the art without leaving the scope of this invention. For example the invention also allows conveyor apparatus for downwardly transferring tubs or similar containers which have been entered therein.

0137570

- 8 -

F. <u>Claims</u>

1. Accumulating conveyor apparatus for effecting substantially vertical movement of members, such as tubs or similar containers, comprising: endless conveyor means defining a substantially vertical transfer path, said conveyor means being provided with engagement means for engaging abutment means on the members; member monitor means for producing control signals in dependence of the relative position of a member; and control means which in response to said control signals regulate the vertical movement of members along said transfer path, characterized in that said endless conveyor means are adapted to continuously extend along substantially the full length of said vertical transfer path; said engagement means include spring biased cams, which are adapted to glide along said abutment means, if the respective member is locked in a stationary position; and said control means include member locking means which are disposed along said vertical transfer path and which are selectively set in a holding position wherein vertical movement of a member is inhibited, if the next downstream situated member is held locked in its stationary position.

2. Accumulating conveyor apparatus according to claim 1, charaterized in that said member locking means include composite sets of spring biased holding cams, which are shaped to allow unilateral passage of said members while inhibiting movement in the opposite direction of a member, which had been allowed to pass, and blocking pawls which are selectively set in a blocking position wherein movement of a member in a direction corresponding to said unilateral passage is inhibited.

FIG.1

1/3

0137570

FIG.2

0137570

FIG.4

FIG.3

1

17

18

11

16

3

3'

13

11

7

14

12